Europäisches Patentamt

(19) European Patent Office

Office européen des brevets

(11) Numéro de publication : **0 296 938 B1**

# (12) FASCICULE DE BREVET EUROPEEN

(45) Date de publication du fascicule du brevet :
**05.06.91 Bulletin 91/23**

(51) Int. Cl.⁵ : **A47C 7/46,** B60N 2/22

(21) Numéro de dépôt : **88401487.9**

(22) Date de dépôt : **15.06.88**

(54) **Perfectionnements aux sièges de véhicules à soutien lombaire réglable.**

(30) Priorité : **18.06.87 FR 8708522**

(43) Date de publication de la demande :
**28.12.88 Bulletin 88/52**

(45) Mention de la délivrance du brevet :
**05.06.91 Bulletin 91/23**

(84) Etats contractants désignés :
**DE ES GB IT**

(56) Documents cités :
**EP-A- 0 169 293**
**US-A- 3 195 955**
**US-A- 4 155 592**
**US-A- 4 556 251**

(73) Titulaire : **BERTRAND FAURE AUTOMOBILE**
**5 Rue Auguste Brunot Rocquencourt**
**F-78150 Le Chesnay (FR)**

(72) Inventeur : **Boisset, Bernard**
**4 Clos de Montfaucon**
**F-91150 Etampes (FR)**

(74) Mandataire : **Behaghel, Pierre et al**
**CABINET PLASSERAUD 84 rue d'Amsterdam**
**F-75009 Paris (FR)**

EP 0 296 938 B1

## Description

L'invention est relative aux sièges de véhicules qui sont équipés de moyens pour régler le degré de soutien lombaire des personnes assises sur ceux-ci et qui comprennent à cet effet un support souple pour les reins à la base de leur dossier et des moyens mécaniques commandables par la personne assise sur le siège pour régler la raideur ou la position d'enfoncement dudit support.

Dans les sièges connus du genre en question, le réglage considéré fait appel en général à une came rotative susceptible d'être commandée par une poignée liée à cette came et cette poignée est montée sur le dossier du siège, à proximité immédiate de la came (voir EP-A-0 169 293).

Ces mécanismes présentent un certain nombre d'inconvénients et en particulier le coût élevé, le déréglage progressif dû à l'avachissement à la longue des portions de coussin qui assurent le soutien lombaire, et surtout la difficulté de l'emploi : en effet, l'accès de la poignée de commande est difficile pour la personne assise sur le siège, de sorte que cette personne est obligée de se placer, lors des réglages, en une position pour laquelle son dos n'est pas en appui contre le dossier, ce qui ne lui permet pas d'apprécier immédiatement si les réglages effectués sont corrects.

L'invention a pour objet, surtout, de remédier à ces différents inconvénients.

A cet effet les moyens de réglage du genre en question sont essentiellement caractérisés en ce qu'ils comprennent un fil ou câble inextensible comportant au moins un premier tronçon extrême tendu horizontalement en travers du dossier de façon à soutenir le support souple et un second tronçon extrême relié au(x) premier(s) tronçon(s) extrême(s) par un tronçon intermédiaire logé sous gaine, un tambour sur lequel est enroulé ledit second tronçon extrême, ledit tambour étant associé à des moyens qui assurent la commande irréversible des déplacements du fil ou câble enroulé sur lui, et une poignée de commande solidarisée angulairement avec ledit tambour et montée sur l'assise du siège en un endroit facilement accessible à une main de la personne assise sur le siège.

Dans des modes de réalisation préférés, on a recours en outre à la disposition suivante : les premiers tronçons extrêmes sont au nombre d'au moins deux, parallèles et raccordés entre eux deux à deux par une boucle semi-circulaire montée de façon à glisser sur un guide rigide lui-même monté sur l'ossature du dossier.

L'invention comprend, mises à part ces dispositions principales, certaines autres dispositions qui s'utilisent de préférence en même temps et dont il sera plus explicitement question ci-après.

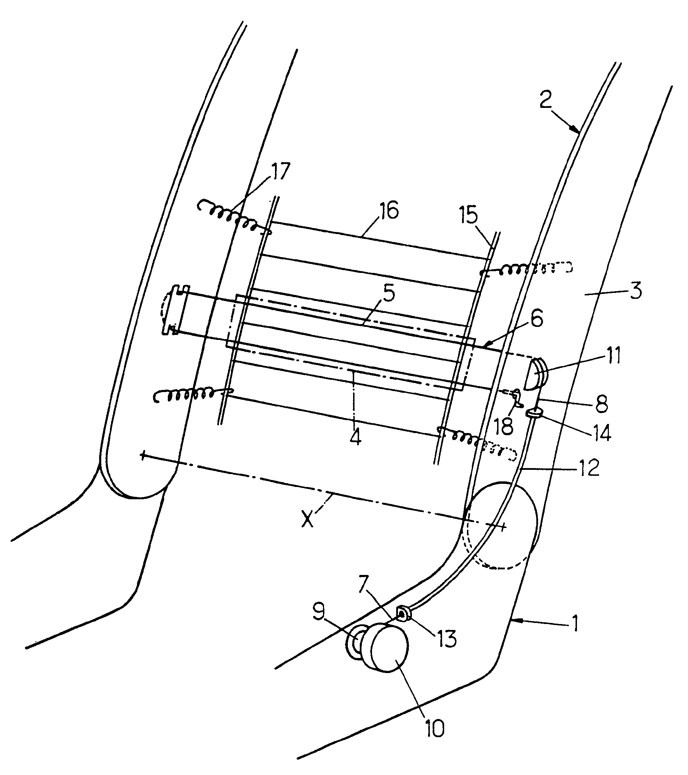

Dans ce qui suit, l'on va décrire un mode de réalisation préféré de l'invention en se référant au dessin ci-annexé d'une manière bien entendu non limitative.

La figure unique, de ce dessin, montre très schématiquement un siège de véhicule perfectionné selon l'invention.

Ce siège comprend une assise 1 et un dossier 2 comportant lui-même deux bras rigides parallèles 3 qui sont montés pivotants sur l'assise autour d'un axe transversal horizontal X.

Le dossier 2 comprend en outre, en sa zone basse correspondant au soutien des reins ou lombes de la personne assise, un support souple qui a été schématisé par les traits mixtes 4 et qui est soutenu par au moins un premier tronçon 5 d'un fil ou câble inextensible 6, tronçon s'étendant transversalement entre les deux bras de dossier 3.

Ce premier tronçon 5 constitue une portion extrême du fil 6.

La portion extrême opposée 7 de ce fil est raccordée audit tronçon 5 par un tronçon intermédiaire 8 et est enroulée autour d'un tambour 9 lui-même lié angulairement à une poignée rotative de commande 10.

Le premier tronçon 5 pourrait être unique, mais il est de préférence composé de $n$ tronçons disposés parallèlement les uns aux autres selon une surface sensiblement parallèle à la surface de portage du support souple 4, le symbole $n$ désignant un nombre entier au moins égal à 2 et généralement au plus égal à 5.

Ces différents tronçons parallèles sont raccordés les uns aux autres par des boucles semi-circulaires prenant appui sur des guides appropriés 11, tels que des demi-poulies à gorge, montés sur les bras 3.

Dans le mode de réalisation qui a été illustré sur le dessin, le nombre $n$ est égal à 2.

L'extrémité, de l'ensemble constitué par le (ou les) tronçon(s) extrême(s) 5, qui est la plus éloignée de la portion restante 7, 8 du fil, est accrochée sur le bras de dossier 3 correspondant de toute manière désirable, par exemple en faisant traverser un trou évidé dans ledit bras par un crochet 18 ancré sur ladite extrémité.

Le tronçon intermédiaire 8 est logé sous une gaine 12 flexible, mais indéformable axialement, gaine calée entre deux butées fixes 13 et 14 montées respectivement sur l'assise 1 et sur l'un des bras 3 du dossier 2.

Du fait qu'il est possible de donner au tronçon intermédiaire 8 une grande longueur, on peut placer la poignée 10 en un endroit relativement éloigné de l'extrémité "utile" 5, du fil 6, qui assure le soutien lombaire.

C'est ainsi que, dans le mode de réalisation illustré, la poignée 10 est directement montée sur l'assise 1, en un emplacement facilement accessible par une main de la personne assise sur le siège.

Le tambour 9 est associé à un mécanisme de blocage connu en soi, tel que ceux désignés par les appellations "boîtier-frein" ou "auto-lock", rendant irréversible la commande des rotations dudit tambour : en d'autres termes, s'il est facile de commander les enroulements et déroulements du fil 6 sur le tambour 9 en faisant tourner la poignée 10, il n'est pas possible d'assurer ces mêmes commandes en agissant directement sur le fil, notamment en tirant sur ce fil.

Le tambour 9 peut également être associé à des moyens électriques d'entraînement en rotation.

Le fonctionnement du mécanisme décrit ci-dessus est le suivant.

Chaque position angulaire de la poignée 10 définit un degré bien déterminé pour la longueur et la tension des tronçons extrêmes 5 du fil 6, c'est-à-dire pour le soutien lombaire assuré par le siège.

En effet l'enfoncement du support souple 4 dans le dossier est limité par les tronçons 5 en question, en raison de l'inextensibilité du fil 6 et de l'accrochage de ses deux extrémités en des points fixes du siège.

Si, à partir de cette situation, la personne assise sur le siège désire renforcer l'effet de soutien exercé sur ses reins par le support souple 4, il lui suffit de faire tourner la poignée 10 dans le sens correspondant à l'enroulement du fil 6 sur le tambour 9, c'est-à-dire à un accroissement de sa tension ou à un raccourcissement de ses brins extrêmes 5.

Le soutien ainsi renforcé est ensuite maintenu après lâcher de la poignée 10 du fait du blocage automatique du fil enroulé.

Au contraire, si le soutien lombaire est trop accusé, il suffit à l'usager du siège de tourner la poignée 10 dans le sens inverse du précédent.

Sur le dessin, le support souple 4 placé au niveau des reins de la personne assise est une nappe composée par deux tiges semi-rigides 15 parallèles aux bras 3 et par des fils parallèles transversaux 16 tendus entre ces deux tiges, ces dernières étant elles-mêmes suspendues aux bras 3 du dossier par des ressorts hélicoïdaux de traction 17.

Avec une telle variante, le fil inextensible 6 sert à limiter les amplitudes des débattements de la nappe souple ci-dessus :
– lorsque l'usager du siège n'appuie pas son dos contre le dossier, ladite nappe se trouve en une position élastiquement flottante pour laquelle les tronçons de fil 5 ne sont pas tendus,
– au contraire, l'appui progressif du dos de l'usager contre cette nappe se traduit par un enfoncement croissant de cette dernière et c'est la limite extrême de cet enfoncement qui est limitée par le fil 6 en son état tendu.

En suite de quoi, et quel que soit le mode de réalisation adopté, on obtient finalement un siège de véhicule dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Siège de véhicule à soutien lombaire réglable comprenant un support souple (4) pour les reins à la base de son dossier (2) et des moyens commandables par la personne assise sur le siège pour régler la raideur ou la position d'enfoncement dudit support, caractérisé en ce que ces moyens de réglage comprennent un fil ou câble inextensible (6) comportant au moins un premier tronçon extrême (5) tendu horizontalement en travers du dossier (2) de façon à soutenir le support souple et un second tronçon extrême (7) relié au(x) premier(s) tronçon(s) extrême(s) par un tronçon intermédiaire (8) logé sous gaine (12), un tambour (9) sur lequel est enroulé ledit second tronçon extrême (7), ledit tambour étant associé à des moyens qui assurent la commande irréversible des déplacements du fil ou câble (6) enroulé sur lui, et une poignée de commande (10) solidarisée angulairement avec ledit tambour et montée sur l'assise (1) du siège en un endroit facilement accessible à une main de la personne assise sur le siège.

2. Siège de véhicule selon la revendication 1, caractérisé en ce que les premiers tronçons extrêmes (5) sont au nombre d'au moins deux, parallèles et raccordés entre eux deux à deux par une boucle semi-circulaire montée de façon à glisser sur un guide rigide (11) lui-même monté sur l'ossature (3) du dossier.

## Ansprüche

1. Fahrzeugsitz mit einer verstellbaren Lendenstütze, die aus einer nachgiebigen Abstützung (4) für die Lenden im unteren Bereich der Rückenlehne (2) und Einrichtungen besteht, die von der auf dem Sitz befindlichen Person betätigt werden können, um die Stärke oder die Lage des Andruckes der Abstützung zu regulieren, dadurch gekennzeichnet, daß die Verstelleinrichtungen aus wenigstens einem nicht dehnbaren Draht oder Kabel (6), der bzw. das wenigstens einen Endabschnitt (5), der in horizontaler Richtung quer zur Rückenlehne (2) gespannt ist und die nachgiebige Abstützung abstützt und einen zweiten Endabschnitt (7) enthält, der mit dem ersten Endabschnitt bzw. den ersten Endabschnitten über einen dazwischenliegenden Abschnitt (8) verbunden ist, der in einer Hülse (12) angeordnet ist, sowie einer Trommel (9), auf die der zweite Endabschnitt (7) aufrollbar ist, wobei die Trommel mit Einrichtungen verbunden ist, die die irreversible Verstellung von Verschiebungen des auf ihr aufgewickelten Drahtes oder Kabels (6) sicherstellen, und einem Stellknopf (10) bestehen, der winkelig mit der Trommel verbunden und an dem Sitzteil (1) des Sitzes an einer Stelle befestigt ist, die für die Hand einer auf dem Sitz sitzenden Person leicht zugänglich ist.

2. Fahrzeugsitz nach Anspruch 1, dadurch gekennzeichnet, daß wenigstens zwei erste Endabschnitte (5) vorgesehen sind, die parallel zueinander verlaufen und paarweise über eine halbkreisförmige Schlaufe miteinander verbunden sind, die auf einer starren Führung (11) gleitet, die ihrerseits an dem Rahmen (3) der Rückenlehne befestigt ist.

## Claims

1. A vehicle seat with adjustable lumbar support, comprising a flexible support (4) for the small of the back at the base of its back (2) and means controllable by the person seated on the seat for adjusting the rigidity or position of sinkage of said support, characterized in that these adjusting means comprise a non-extensible wire or cable (6) comprising at least one first end section (5) stretched horizontally through the back (2) in such a way as to support the flexible support and a second end section (7) connected to the first end section(s) by an intermediate section (8) accomodated in a sheath (12), a drum (9) on which said second end section (7) is wound, said drum being associated with means ensuring irreversible control of the movements of the wire or cable (6) wound thereon, and a control handle (10) firmly connected angularly with said drum and mounted on the seating portion (1) of the seat in a place which is easily accessible to a hand of the person seated on the seat.

2. A vehicle seat according to claim 1, characterized in that the first end sections (5) number at least two, are parallel with each other and connected together in pairs by a semi-circular loop mounted in such a way as to slide on a rigid guide (11) itself mounted on the frame (3) of the back.